# EUROPÄISCHE PATENTSCHRIFT

(11) **EP 3 541 743 B1**
(45) Veröffentlichungstag und Bekanntmachung des Hinweises auf die Patenterteilung: **06.08.2025**
(21) Anmeldenummer: 17797546.3
(22) Anmeldetag: 24.10.2017
(51) Int. Cl.: C01B 3/00, C01B 3/22, C01B 3/50

(54) **VERFAHREN ZUM BEREITSTELLEN VON WASSERSTOFFGAS, DEHYDRIER-REAKTOR UND TRANSPORT-CONTAINER**
METHOD FOR PROVIDING HYDROGEN GAS, DEHYDROGENATION REACTOR, AND TRANSPORT CONTAINER
PROCÉDÉ DE PRODUCTION DE GAZ HYDROGÈNE, RÉACTEUR DE DÉSHYDROGÉNATION ET CONTENANT DE TRANSPORT

(30) Priorität: 16.11.2016 DE 102016222596
(43) Veröffentlichungstag der Anmeldung: 25.09.2019
(73) Patentinhaber: HYDROGENIOUS LOHC TECHNOLOGIES GMBH, 91058 Erlangen (DE)
(72) Erfinder: KUSCHE, Matthias, 90571 Schwaig (DE); PAETZ, Caspar, 91054 Erlangen (DE); WESTERATH, Federico, 90518 Altdorf (DE); MELCHER, Berthold, 91052 Erlangen (DE); RANDIG, Cornelius, 91058 Erlangen (DE); SCHNEIDER, Martin, 91056 Erlangen (DE); TEICHMANN, Daniel, 80796 München (DE)
(74) Vertreter: Rau, Schneck & Hübner Patentanwälte Rechtsanwälte PartGmbB
(86) Internationale Anmeldenummer: PCT/EP2017/077172
(87) Internationale Veröffentlichungsnummer: WO 2018/091239

(56) Entgegenhaltungen:
- WO-A1-2016/078948
- WO-A1-2016/078949
- WO-A2-2015/061215
- DE-A1- 102008 034 221
- DE-A1- 102010 038 491
- DE-A1- 102014 006 430
- JP-A- 2002 134 141
- US-A1- 2013 142 726
- US-B2- 7 485 161

## Beschreibung

Die Erfindung betrifft ein Verfahren zum Bereitstellen von Wasserstoffgas.

Aus EP 1 475 349 A2 ist ein Verfahren zum Speichern und Freisetzen von Wasserstoffgas an einem Wasserstoff-Trägermaterial bekannt. Ähnliche Verfahren sind bekannt aus DE 10 2014 006 430 A1, US 7,485,161 B2, JP 2002-134141 A, WO 2015/061 215 A2, US 2013/142726 A1 und WO 2016/078 949 A1.

Der Erfindung liegt die Aufgabe zugrunde, das Freisetzen von Wasserstoffgas derart zu verbessern, dass Wasserstoffgas mittels eines robusten und unter wirtschaftlichen Gesichtspunkten durchführbaren Verfahrens mit einer erhöhten Qualität, insbesondere Reinheit, bereitgestellt werden kann.

Die Aufgabe wird durch ein Verfahren mit den im Anspruch 1 angegebenen Merkmalen gelöst. Der Kern der Erfindung besteht darin, für das Bereitstellen von Wasserstoffgas erforderliche Verfahrensschritte derart vorteilhaft zu kombinieren, dass Wasserstoff mit erhöhter Reinheit unter robusten und wirtschaftlichen Bedingungen von einem Wasserstoff-Trägermaterial freigesetzt werden kann, insbesondere einer organischen Flüssigkeit, die auch als liquid organic hydrogen carrier (LOHC) bekannt ist. Erfindungsgemäß wurde gefunden, dass ein Vorwärmen des zumindest teilweise hydrierten Wasserstoff- Trägermaterials energieeffizient für das Gesamtverfahren ist. In Abhängigkeit der Reaktionsbedingungen und der Beladung des Wasserstoff-Trägermaterials ist eine mehr oder weniger vollständige Entladung, also Dehydrierung, möglich. Insbesondere ist das zugeführte LOHC-Material nicht vollständig hydriert. Ein Hydriergrad beträgt typischerweise zwischen 50 % und 100 %, bevorzugt zwischen 80 % und 95 %. Nach der Dehydrierung beträgt der Hydriergrad beispielsweise zwischen 0 % und 50 %, kann aber auch größer sein.

Durch ein Reinigen des freigesetzten Wasserstoffgases ist die Qualität, insbesondere der Reinheit des Wasserstoffgases, verbessert. Ein Kühlen und Konditionieren des zumindest teilweise dehydrierten Wasserstoff-Trägermaterials gewährleistet eine erhöhte Sicherheit beim Speichern und Handhaben des Wasserstoff-Trägermaterials. Das zumindest teilweise dehydrierte Wasserstoff-Trägermaterial wird auf eine Zieltemperatur von weniger als 60 °C, insbesondere weniger als 50 °C und insbesondere auf etwa 40 °C abgekühlt. Bei dieser Temperatur ist eine sichere Handhabung und Lagerung des Wasserstoff-Trägermaterials, insbesondere des LOHC, gefahrlos möglich. Das Sicherheitsrisiko ist reduziert. Das Konditionieren umfasst das Entfernen von physikalisch gelöstem Rest-Wasserstoffgas vom Wasserstoff- Trägermaterial. Das erfindungsgemäße Verfahren ist insbesondere auch bei Kleinanlagen wirtschaftlich rentabel durchführbar. Derartige Kleinanlagen können dezentral betrieben werden. Als Kleinanlage ist im Folgenden eine transportable Anlage, insbesondere innerhalb eines Transport-Containers, zu verstehen. Eine derartige Kleinanlage weist eine Leistung von höchstens 5 MW auf. Die Versorgung der Kleinanlage mit Wasserstoff- Trägermaterial erfolgt mittels LKW-Transport, insbesondere also nicht mittels Schiff, Zug oder Pipelines. Der Transport von Wasserstoff-Trägermaterial ist örtlich und zeitlich flexibel auf dem Straßenweg möglich. Das Verfahren ist insbesondere mittels eines Dehydrier-Reaktors möglich, der in einem an sich bekannten Transport-Container anordenbar ist. Mittels des Transport-Containers kann der Dehydrier-Reaktor flexibel und unkompliziert zu einem dezentral gelegenen Einsatzort transportiert und dort betrieben werden.

Ein Vorwärmen gemäß Anspruch 2 ermöglicht eine effiziente und unmittelbare Zuführung von Wärme. Vorteilhaft ist, wenn das Edukt, also das zumindest teilweise hydrierte Wasserstoff-Trägermaterial, mittels eines austretenden Produktstroms der Dehydrierung vorgewärmt wird. Der Produktstrom der Dehydrierung umfasst das freigesetzte Wasserstoffgas und das zumindest teilweise dehydrierte Wasserstoff- Trägermaterial. Die latent vorhandene Wärme im Produktstrom wird unmittelbar zum Vorwärmen des Wasserstoff- Trägermaterials genutzt. Die Effizienz des Verfahrens ist erhöht. Das freigesetzte Wasserstoffgas und das zumindest teilweise dehydrierte Wasserstoff-Trägermaterial liegen bei Reaktionstemperatur zur Verfügung, die etwa bei 300 °C vorliegt. Dadurch, dass der Eduktstrom direkt mit mindestens einem der Edukt-Ströme direkt kontaktiert wird, insbesondere in Form eines Gegenstromwäschers oder eines Sprühkondensators, ist neben der effizienten Wärmerückgewinnung zur Effizienzerhöhung auch einen Abtrennung von Verunreinigungen des freigesetzten Wasserstoffgases und/oder des zumindest teilweise dehydrierten Wasserstoff-Trägermaterials möglich. Das Vorwärmen kann durch direkten oder indirekten Kontakt mittels der Produktströme erfolgen. Das Vorwärmen kann durch das Kontaktieren mit dem freigesetzten Wasserstoffgas, oder dem zumindest teilweise dehydrierten Wasserstoff- Trägermaterial oder einer Mischung aus beidem erfolgen.

Das Freisetzen von Wasserstoffgas gemäß Anspruch 3 ist besonders vorteilhaft möglich. Die Reaktionsbedingungen begünstigen eine effiziente Freisetzung.

Das Reinigen des freigesetzten Wasserstoffgases gemäß Anspruch 4 ist effektiv. Dadurch ist es möglich, eine geforderte Reinheit des Wasserstoffgases von bis zu 99,999 % zu gewährleisten, die insbesondere zur Nutzung des Wasserstoffgases in einer Brennstoffzelle oder für die Lebensmittelindustrie gefordert wird. Erfindungsgemäß wurde erkannt, dass das Reinigen in Abhängigkeit des späteren Einsatzzwecks des freigesetzten Wasserstoffgases veränderlich festgelegt werden kann. Insbesondere sind Methan-Verunreinigungen für die Nutzung des Wasserstoffgases in Brennstoffzellen vergleichsweise unproblematisch. Dagegen sind Kohlenstoff-Monoxid-Verunreinigungen bei einer Brennstoffzellennutzung des Wasserstoffgases zu vermeiden. Kohlenwasserstoff- Verunreinigungen bei einer Nutzung von Wasserstoffgas als Brenngas sind eher unproblematisch, wobei Kohlenwasserstoff- Verunreinigungen in der Lebensmittelindustrie nicht akzeptabel sind. Die abzutrennenden Verunreinigungen können in festem, flüssigem oder gasförmigem Aggregatzustand vorliegen. Eine Verunreinigung kann beispielsweise in Form von Aerosol-Tropfen im Wasserstoffgas gegeben sein.

Ein Abtrennen in mindestens einer Abtrennstufe ermöglicht das gezielte Abtrennen von Verunreinigungen in Abhängigkeit deren Aggregatzustands. Insbesondere ist es dadurch möglich, für jeden Aggregatzustand einer Verunreinigung, also fest, flüssig oder gasförmig, eine separate Abtrennstufe bereitzustellen. In Kenntnis vorliegender Verunreinigungen ist eine effiziente Reinigung des Wasserstoffgases möglich. Insbesondere erfolgt das Abtrennen mehrstufig, also mit mehreren, insbesondere hintereinander geschalteten Abtrennstufen. Eine Feststoffverunreinigung kann beispielsweise Koks sein, also stark kohlenhaltiger Brennstoff mit hoher spezifischer Oberfläche. Eine flüssige Verunreinigung kann in Form von LOHC-und/oder Aerosol-Tröpfchen vorliegen. Gasförmige Verunreinigungen können in Form von Kohlenstoffmonoxid, Methan, Kohlenstoffdioxid und/oder Wasserdampf sowie in Form von flüchtigen Kohlenwasserstoffen wie beispielsweise Toluol oder Cyclohexan vorliegen.

Eine Druckerhöhung der Gasphase gemäß Anspruch 5 ermöglicht eine Verbesserung der Gesamt-Effizienz des Verfahrens. Die erhöhte Effizienz ergibt sich daraus, dass mehr nutzbares Produktgas, also Wasserstoffgas, je eingesetzter Menge Stoff, also LOHC, zur Verfügung steht. Je höher der Druck bei der Druckwechsel-Adsorption, desto höher ist die Ausbeute des nutzbaren Produktgases. Besonders vorteilhaft hat es sich erwiesen, wenn eine Druckerhöhung des freigesetzten Wasserstoffgases vorgesehen ist. Die Druckerhöhung kann als Zwischenkompression durch ionische, thermische und/oder mechanische Kompression erfolgen.

Abtrennverfahren gemäß Anspruch 6 gewährleisten eine vorteilhafte Reinigung. Für das Abtrennen gasförmiger Verunreinigungen dienen insbesondere Adsorptivverfahren oder eine Umwandlung der gasförmigen Verunreinigungen über chemische Reaktionen.

Insbesondere wurde gefunden, dass Adsorptionsverfahren, insbesondere ein Druckwechsel-Adsorptionsverfahren bei höhen Gasdrücken besonders effizient durchführbar ist.

Bei der Druckwechsel-Adsorption wird Gas unter erhöhtem Druck von mindestens 5 bar, insbesondere mindestens 10 bar und insbesondere mindestens 15 bar einem Reaktor, insbesondere einem Festbett-Reaktor, zugeführt, der mit dem Adsorbens gefüllt ist. Eine oder mehrere Komponenten des Gases, die sogenannten schweren Komponenten, werden adsorbiert. Am Ausgang des Reaktors kann die sogenannte leichte Komponente, die nicht adsorbiert worden ist, in aufkonzentrierter Form entnommen werden. Nach einer Sättigung des Adsorbens kann durch Druckabsenkung die adsorbierte, schwere Komponente freigesetzt, also desorbiert, und separat abgeführt werden.

Zusätzlich kann die adsorptive Abscheidung in Form einer Druckwechsel-Adsorption und/oder Temperaturwechsel-Adsorption ausgeführt werden. Die Temperatur bei einer möglichen Temperaturwechsel-Adsorption beträgt typischerweise weniger als 100 °C, insbesondere weniger als 60 °C und insbesondere weniger als 30 °C. Die Reinheit des Wasserstoffgases kann dadurch verbessert werden. Die Regeneration des Adsorptionsmittels erfolgt bei einer Temperatur von mindestens 100 °C, insbesondere mindestens 150 °C und insbesondere mindestens 200 °C. Das während der Regeneration des Adsorptionsmittels abgeführte, wasserstoffhaltige Gasgemisch kann zur weiteren Erhöhung des Wirkungsgrades des Prozesses einer thermischen Verwertung, insbesondere einer Verbrennung, zugeführt werden.

Ein Abtrennen gemäß Anspruch 7 ermöglicht die vorteilhafte Umwandlung einer gasförmigen Verunreinigung anhand von im Produktstrom installierten katalytisch aktiven Materialien. Es wurde gefunden, dass die im Produktstrom vorhandenen Reaktionsbedingungen denen einer katalytischen Gasphasenreaktion entsprechen wie beispielsweise der Methanisierung von Kohlenstoffmonoxid. Dadurch ist eine besonders effiziente Nachkonditionierung des Wasserstoffgases möglich. Ein separater, zusätzlicher Reaktor zur Konditionierung des freigesetzten Wasserstoffgases ist entbehrlich. Insbesondere kann das Reinigen des Wasserstoffgases als integraler Prozessschritt beim Bereitstellen des Wasserstoffgases vorgesehen sein. Die Abtrennung flüssiger Verunreinigungen wie beispielsweise Aerosol ist effizient in mehrstufigen Abtrennverfahren möglich. Mittels eines Koaleszenzfilters kann die Tröpfchengröße der Aerosole zunächst erhöht und mittels einer anschließenden Lamellenabscheidung effizient von der gasförmigen Phase des Produktstroms getrennt werden.

Ein kontrolliertes Reinigen gemäß Anspruch 8 gewährleistet die Bereitstellung des Wasserstoffgases mit der geforderten Reinheit. Das Reinigen ist effizient veränderlich einstellbar möglich. Einerseits ist gewährleistet, dass das Wasserstoffgas die geforderte Reinheit aufweist. Andererseits ist gewährleistet, dass ein übertriebenes Reinigen, also das Reinigen bis zu einem Reinheitsgrad, der technisch nicht erforderlich ist, unterbleibt. Ein Überreinigen, also ein Reinigen über einen geforderten Reinheitsgrad hinaus, ist vermieden. Der erforderliche Aufwand zum Reinigen ist kontrollierbar. Insbesondere ist es vorteilhaft, den aktuellen Reinheitsgrad mittels geeigneter Sensoren kontinuierlich zu überwachen und mittels einer Regeleinheit zu regeln. Ein typischer Reinheitsgrad kann 99,999 % für das Wasserstoffgas betragen.

Ein Kühlen gemäß Anspruch 9 ist besonders effizient möglich. Insbesondere für den Fall, dass ein Abkühlen durch das direkte oder indirekte Kontaktieren mit den Produktströmen allein nicht ausreichend oder nicht ausreichend schnell, möglich ist, kann eine zusätzliche Kühleinheit zur Verfügung gestellt werden.

Ein Entfernen von Wasserstoffgas, das insbesondere physikalisch gelöst an dem zumindest teilweise dehydrierten Wasserstoff- Trägermaterial vorliegt, gemäß Anspruch 10 verbessert die Lagerungsbedingungen des Wasserstoff-Trägermaterials. Dadurch kann das Risiko einer explosionsfähigen Wasserstoff-Atmosphäre in einem Speichertank für das zumindest teilweise dehydrierte Wasserstoff- Trägermaterial reduziert werden. Eine explosionsfähige Wasserstoff-Atmosphäre in dem Speicherbehälter kann dadurch entstehen, dass bei einer längeren Lagerung des zumindest teilweise dehydrierten Wasserstoff- Trägermaterials ohne ausreichende Belüftung oberhalb der Flüssigphase Wasserstoff ausgast. Das Abtrennen des physikalisch gelösten Wasserstoffgases kann einstufig oder mehrstufig durch Abtrennen erfolgen. In einer ersten Stufe kann eine Verteileinheit ähnlich einem Duschkopf genutzt werden, die mit einer Strip-Kolonne oder einem Sprühturm verbunden ist. Zusätzlich oder alternativ kann ein Spülgas, insbesondere ein Inertgas wie Stickstoff oder Argon oder Druckluft, genutzt werden, um in einer Kolonne Wasserstoffgas auszutragen. Zusätzlich oder alternativ zu einem Spülgas kann zum Austragen des Wasserstoffgases ein Unterdruck, insbesondere Vakuum, angelegt werden. Vorteilhaft ist es, wenn der im Wasserstoff-Trägermaterial verbleibende Wasserstoffgehalt zwischen 0,1 und 10 Gewichts-ppm beträgt. Selbst wenn bei einer längerfristigen Lagerung des Wasserstoff- Trägermaterials Wasserstoffgas ausgast, ist die dadurch erzielte Wasserstoffkonzentration in dem Speicherbehälter kleiner als eine Explosionsgrenze des Wasserstoffs in Luft und/oder der Luft mit Anteilen an LOHC. Das Risiko einer Explosion infolge ausgasenden Wasserstoffs kann auch dadurch reduziert werden, dass das Luftpolster in dem Lagerbehälter vergleichsweise groß ausgelegt wird, in dem ein maximal zulässiger Füllgrad typischerweise auf 80 % des Behältervolumens begrenzt wird. Dadurch ist gewährleistet, dass auch bei dem Ausgasen von Wasserstoffgas die kritische Explosionsgrenze nicht erreicht wird. Das Konditionieren des Wasserstoff-Trägermaterials gewährleistet eine dauerhafte zuverlässige Lagerung desselben.

Es ist auch denkbar, eine Abtrennstufe für Verunreinigungen im festen Zustand, insbesondere als Abrieb des Katalysator-Materials, vorzusehen.

Ein Dehydrier-Reaktor, umfassend ein Reaktor-Gehäuse, mindestens eine im Reaktor-Gehäuse angeordnete Katalysator-Halterung, an der ein Katalysatorträger mit Katalysatormaterial angeordnet ist, eine Heizeinheit zum Beheizen der mindestens einen Katalysator-Halterung, eine Verteileinheit zum gleichmäßigen Verteilen eines Zulaufstroms von zumindest teilweise hydriertem Wasserstoff-Trägermaterial an der mindestens eine Katalysator-Halterung und mindestens eine Austrittsöffnung zum kontinuierlichen Abführen von Wasserstoffgas und zumindest teilweise dehydriertem Wasserstoff-Trägermaterial aus dem Dehydrier-Reaktor, ermöglicht eine vorteilhafte Durchführung des Verfahrens. Die Vorteile des Dehydrier-Reaktors entsprechen im Wesentlichen den Vorteilen des Verfahrens, worauf hiermit verwiesen wird. Es wurde gefunden, dass das Katalysatormaterial vorteilhaft in mindestens einer in einem Reaktorgehäuse angeordneten Katalysator-Halterung angeordnet sein kann. Als Katalysator-Halterung kann ein Rohr, eine Platte oder eine daraus gebildete Kombination dienen. Die Verteileinheit kann vorteilhaft Kapillare, Strömungsbrecher und/oder Verteilerböden aufweisen. Mindestens eine Austrittsöffnung ermöglicht das kontinuierliche Abführen von Wasserstoffgas und Wasserstoff- Trägermaterial. Es können auch zwei Austrittsöffnungen vorgesehen sein, wobei eine Grobtrennung beim Abführen in gasförmige und in flüssige Phasen der Produktströme unterschieden werden kann. Ein Phasentrenner, der insbesondere zum verteilten Zuführen des zumindest teilweise dehydrierten Wasserstoff-Trägermaterials dient, kann eine eingebaute Verteileinheit umfassen, die zum Erzeugen großer spezifischer Oberflächen dient. Die Verteileinheit kann als Strip-Kolonne, als Extruder, als Sprühturm oder als eine Kombination dieser Einheiten ausgeführt sein.

Eine Heizeinheit, die einen mit Flüssigkeit, Dampf und/oder Gas gefüllten Mantel aufweist, gewährleistet eine effiziente Beheizung. Die Heizeinheit begünstigt die stark endotherme Dehydrier-Reaktion im Dehydrier-Reaktor.

Die Verwendung von Platin, Palladium, Nickel, Rhodium und/oder Ruthenium mit jeweils einem Gewichtsanteil von 0,1 % bis 10 % bezogen auf den, insbesondere inerten, Katalysatorträger als Katalysatormaterial ermöglicht ein effizientes Freisetzen des Wasserstoffgases.

Ein Katalysator-Träger, der Aluminiumoxid, Siliziumoxid, Siliziumkarbid und/oder Aktivkohle umfasst, ermöglicht eine vorteilhafte Anbringung des Katalysatormaterials. Das Katalysator-Trägermaterial begünstigt die stark endotherme Dehydrier-Reaktion im Dehydrier-Reaktor. Vorteilhaft ist es, wenn ein Katalysator-Trägermaterial ein inertes Material ist. Zusätzlich kann inertes Zusatzmaterial, beispielsweise in Form von Glaskugeln, Metallkugeln oder metallischen Strukturen wie Röhren, Netzen oder Gittern im Inneren oder außerhalb an den Halterungen angebracht sein. Das inerte Zusatzmaterial dient beispielsweise zur Verdünnung des Katalysatormaterials und/oder zur Halterung des Katalysator-Trägermaterials. Es ist beispielsweise ein Aufbau denkbar mit einem Netz aus inertem Zusatzmaterial, auf dem Glaskugeln zum Verdünnen des Katalysatormaterials vorgesehen sind, wobei auf den Glaskugeln Katalysator-Material angeordnet ist. Es ist beispielsweise denkbar, dass das inerte Katalysator-Trägermaterial und das inerte Zusatzmaterial gleichartig und insbesondere identisch sind. Insbesondere unterscheidet sich das inerte Katalysator-Trägermaterial von dem inerten Zusatzmaterial durch eine metallische Beschichtung.

Ein Transport-Container, in dem ein Dehydrier-Reaktor angeordnet ist, ermöglicht einen flexiblen, ortsunabhängigen und dezentralen Einsatz des Verfahrens zum Bereitstellen von Wasserstoff.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine schematische Seitenansicht eines Transport-Containers mit einem Dehydrier-Reaktor,
- Fig. 2: eine vergrößerte schematische Seitenansicht des Dehydrier-Reaktors in Fig. 1,
- Fig. 3: eine Fig. 1 entsprechende Schemaansicht eines Transport-Containers mit einem Dehydrier-Reaktor gemäß einem zweiten Beispiel,
- Fig. 4: eine vergrößerte schematische Seitenansicht des Dehydrier-Reaktors in Fig. 3,
- Fig. 5: eine vergrößerte schematische Seitenansicht einer LOHC-Konditioniereinheit in Fig. 3.

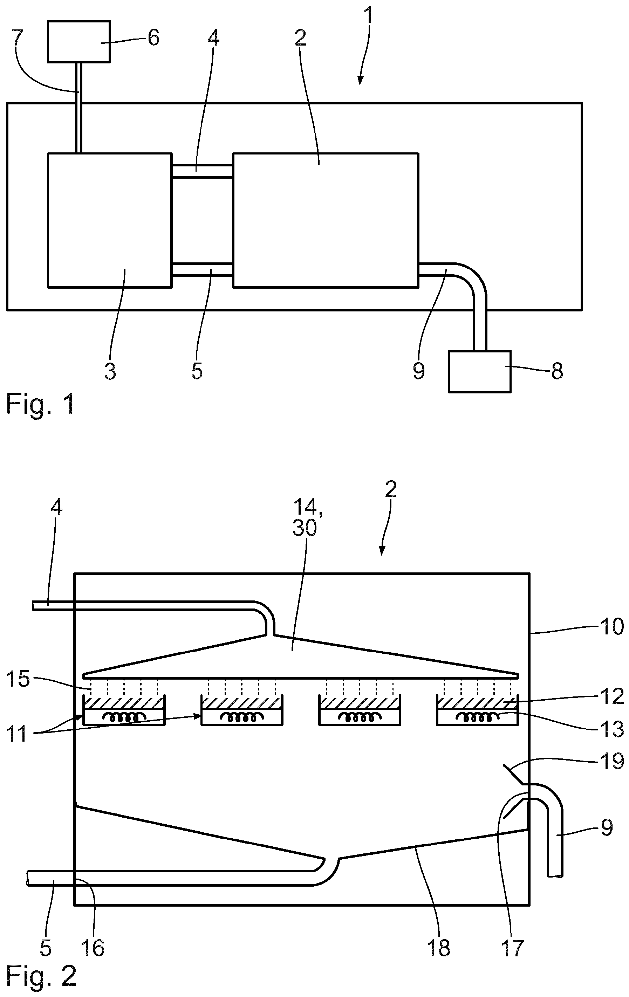

Ein in Fig. 1 gezeigter Transport-Container 1 ist an sich bekannt und kann mit einem Schiff, einem Lastkraftwagen und/oder einem Eisenbahnwagon unkompliziert transportiert werden. Der Transport-Container 1 weist standardisierte Abmessungen auf.

In dem Transport-Container 1 ist ein Dehydrier-Reaktor 2 angeordnet, der mit einem LOHC-Speicherbehälter 3 mittels einer LOHC-Zuführleitung 4 und einer LOHC-Abführleitung 5 verbunden ist. LOHC dient als Wasserstoffträger-Medium. Der LOHC-Speicherbehälter 3 ist mittels einer LOHC-Quelle 6 über eine Leitung 7 verbunden. Der LOHC-Speicherbehälter 3 dient gemäß dem gezeigten Ausführungsbeispiel zur Speicherung von beladenem LOHC, das in dem Dehydrier-Reaktor 2 durch Freisetzung von Wasserstoffgas entladen, also dehydriert wird.

Zusätzlich kann ein nicht dargestellter weiterer Speicherbehälter vorgesehen sein, in dem das im Dehydrier-Reaktor 2 entladene Wasserstoffträger-Medium gespeichert wird. Das bedeutet, dass insbesondere zwei getrennte LOHC-Speicherbehälter vorgesehen sind, einer für das beladene, also energiereiche LOHC, und einer für das entladene, also energiearme, LOHC. Die beiden Speicherbehälter können im Transport-Container 1 oder außerhalb des Transport-Containers 1 angeordnet sein.

Es ist beispielsweise auch möglich, dass große LOHC-Speicherbehälter jeweils außerhalb des Transport-Containers 1 angeordnet sind, um eine ausreichende, langfristige Versorgung mit LOHC gewährleisten zu können. In dem Transport-Container können kleinere LOHC-Speicherbehälter als Pufferbehälter vorgesehen sein, um ein Betreiben des Transport-Containers auch dann zu gewährleisten, wenn die Versorgung mit LOHC-Medium aus den außerhalb des Transport-Containers 1 angeordneten Speicherbehältern - insbesondere vorübergehend - nicht gewährleistet ist.

Die LOHC-Quelle 6 kann eine externe Quelle wie beispielsweise ein LOHC-Transportfahrzeug sein. Zusätzlich oder alternativ kann die LOHC-Quelle 6 auch einen Hydrier-Reaktor aufweisen, der zum Beladen, also zum zumindest teilweisen Hydrieren, von LOHC als Wasserstoff-Trägermaterial dient. Dazu wird zumindest teilweise unbeladenes LOHC in dem nicht gezeigten Hydrier-Reaktor mit Wasserstoffgas beladen. Das Wasserstoffgas kann beispielsweis aus einer Elektrolyse in einem nicht gezeigten Elektrolyseur stammen. Der Elektrolyseur wird beispielsweise mit Strom aus Windkraft und/oder Photovoltaik-Anlagen gespeist. Die Stromversorgung des Elektrolyseurs kann auch über ein, insbesondere öffentliches, Stromnetz erfolgen.

Die LOHC-Quelle 6 ist insbesondere über die Leitung 7 mit dem LOHC-Speicherbehälter 3 verbindbar. Die LOHC-Quelle 6 ist insbesondere außerhalb des Transport-Containers 1 angeordnet. Die Leitung 7 kann eine geeignete Schnittstelle aufweisen, um eine unkomplizierte Verbindbarkeit mit der LOHC-Quelle 6 zu schaffen. Die LOHC-Quelle 6 ist insbesondere stationär an einem Ort der Stromerzeugung angeordnet. Es ist auch denkbar, die LOHC-Quelle 6 zumindest teilweise, insbesondere in Form des Hydrier-Reaktors und/oder des Elektrolyseurs, in dem Transport-Container 1 zu integrieren.

Die LOHC-Zuführleitung 4 dient zum Zuführen von zumindest teilweise hydriertem LOHC aus dem LOHC-Speicherbehälter 3 in den Dehydrier-Reaktor 2. Die LOHC-Abführleitung 5 dient zum Abführen von zumindest teilweise dehydriertem LOHC aus dem Dehydrier-Reaktor 2 in den LOHC-Speicherbehälter 3.

Der Dehydrier-Reaktor 2 ist mit einem Wasserstoff-Verbraucher 8 über eine Wasserstoff-Leitung 9 verbunden. Der Wasserstoff-Verbraucher 8 ist als Brennstoffzelle ausgeführt und ermöglicht ein Verstromen des im Dehydrier-Reaktor 2 erzeugten Wasserstoffs. Es sind auch andere Wasserstoffnutzungen möglich. Es ist auch denkbar, den Wasserstoff-Verbraucher 8 in Form der Brennstoffzelle in dem Transport-Container 1 zu integrieren, um elektrischen Strom für einen Stromverbraucher und/oder ein Stromnetz zur Einspeisung zur Verfügung zu stellen. Zusätzlich oder alternativ zur Wasserstoffnutzung durch die Brennstoffzelle sind beispielsweise eine thermische Verwertung des Wasserstoffs und/oder die Bereitstellung des Wasserstoffs zur stofflichen Nutzung, insbesondere in der Lebensmittelindustrie, denkbar.

Nachfolgend wird anhand der Fig. 2 der Dehydrier-Reaktor 2 näher erläutert. Der Dehydrier-Reaktor 2 weist ein Reaktorgehäuse 10 auf, in dem mehrere Katalysator-Halterungen 11 angeordnet sind. An jeder Katalysator-Halterung 11 ist ein Katalysator-Träger mit Katalysatormaterial 12 angeordnet. Gemäß der gezeigten Ausführungsform sind die Katalysator-Halterungen 11 liegend, also im Wesentlichen horizontal, angeordnet. Es ist auch denkbar, die Katalysator-Halterungen 11 gegenüber der Horizontalen geneigt und insbesondere senkrecht, anzuordnen. Die Katalysator-Halterungen 11 mit dem Katalysatormaterial 12 bilden ein Katalysatorfestbett. Der Dehydrier-Reaktor 2 ist einstufig betreibbar.

An den Katalysator-Halterungen 11 ist jeweils eine Heizeinheit 13 vorgesehen, um eine unmittelbare und effiziente Beheizung des Katalysatormaterials 12 zu ermöglichen. Die Heizeinheit 13 ist insbesondere in der Katalysator-Halterung 11 integriert. Die Heizeinheit 13 ist insbesondere als ein mit Flüssigkeit, Dampf und/oder Gas gefüllter Mantel und/oder als elektrische Heizung ausgeführt.

An die LOHC-Zuführleitung 4 ist im Reaktorgehäuse 10 eine LOHC-Verteileinheit 14 angeschlossen. Die LOHC-Verteileinheit 14 ist im Wesentlichen in Form eines Duschkopfs ausgeführt und ermöglicht eine verteilte Zuführung des LOHC 15 auf das Katalysatormaterial 12 an den Katalysator-Halterungen 11. Anstelle des Duschkopfs kann die LOHC-Verteileinheit 14 auch als Kapillar-Platte, als Strömungsbrecher und/oder als Verteilerboden ausgeführt sein.

Zusätzlich kann der Duschkopf auch als Einheit zur Oberflächenvergrößerung 30 ausgeführt sein. Die Einheit zur Oberflächenvergrößerung 30 ermöglicht eine vorteilhafte Oberflächenvergrößerung des LOHC 15 beim Zuführen auf die Katalysator-Halterungen 11. Dadurch ist die nachfolgende Dehydrier-Reaktion begünstigt, da das Edukt, also das beladene LOHC 15 eine vergleichsweise große Oberfläche aufweist, um mit dem in den Katalysator-Halterungen 11 angeordneten Katalysatormaterial 12 zu reagieren. Die Einheit zur Oberflächenvergrößerung des LOHC kann auch separat und insbesondere in einer von einem Duschkopf abweichenden Ausführung vorgesehen sein.

Der Dehydrier-Reaktor 2 weist eine LOHC-Austrittsöffnung 16 und eine Wasserstoffgas-Austrittsöffnung 17 auf. Mittels einer Sammeleinrichtung 18 wird zumindest teilweise dehydriertes LOHC 15 über die LOHC-Austrittsöffnung 16 und die LOHC-Abführleitung 5 aus dem Dehydrier-Reaktor 2 abgeführt. Die Sammeleinrichtung 18 kann ein trichterförmiges Auffangbecken mit Ableitung sein. Es sind auch andere Ausführungen der Sammeleinrichtung 18 denkbar.

Im Bereich der Wasserstoffgas-Austrittsöffnung 17 kann eine Absaugvorrichtung 19 vorgesehen sein, um den Austritt des Wasserstoffgases auf dem Dehydrier-Reaktor 2 zu fördern. Die Dehydrier-Reaktion kann mittels der Absaugvorrichtung 19 beschleunigt werden. Auf die Absaugvorrichtung kann aber auch verzichtet werden. Insbesondere für den Fall, dass das Freisetzen bei einem Prozessdruck von über 1 bar stattfindet, kann das freigesetzte Wasserstoffgas aus dem Dehydrier-Reaktor 2 ohne zusätzliche Druckfördereinheiten, wie beispielsweise einen Kompressor, erfolgen. Vorteilhaft ist es dann, den Druck des Wasserstoffgases an gegebenenfalls erforderliche, nachgelagerte Aufreinigungs-Schritte für das Wasserstoffgas anzupassen.

Nachfolgend wir die Funktion des Dehydrier-Reaktors 2 gemäß einem ersten Verfahren näher erläutert. Ein Eduktstrom mit zumindest teilweise hydriertem LOHC als Wasserstroff-Trägermedium wird aus dem LOHC-Speicherbehälter 3 über die LOHC-Zuführleitung 4 dem Dehydrier-Reaktor 2 zugeführt. Vor der Zuführung wird das LOHC-Edukt mit zumindest teilweise dehydriertem Wasserstoff-Trägermaterial, also LOHC-Produkt, aus dem Dehydrier-Reaktor 2 vorgewärmt. Dazu können die LOHC-Zuführleitung 4 und die LOHC-Abführleitung 5 zumindest abschnittsweise zusammen geführt sein, um eine direkte Kontaktierung von LOHC-Edukt und LOHC-Produkt insbesondere im Gegenstromverfahren zu ermöglichen.

Das Dehydrieren des zumindest teilweise beladenen Wasserstoff-Trägermaterials erfolgt im Dehydrier-Reaktor 2 bei einem Reaktionsdruck von 2,5 bar und einer Reaktionstemperatur von 310 °C. Das freigesetzte Wasserstoffgas wird mittels einer nicht dargestellten Reinigungseinheit gereinigt und gekühlt. Insbesondere erfolgt eine katalytische Wandlung von Kohlenstoffmonoxidgas zu Methan in einem beschichten Drahtgitter und in einer Festbett-Adsorption. Das freigesetzte Wasserstoffgas wird über die Wasserstoffgas-Austrittsöffnung 17 und der Wasserstoff-Leitung 9 der Brennstoffzelle 8 zur Verstromung zugeführt.

Das LOHC-Produkt, das bereits zur Vorwärmung des LOHC-Edukts genutzt worden ist, wird in Abhängigkeit der Restwärme in einem separaten, nicht dargestellten Kühler gekühlt und anschließend einer nicht dargestellten Konditionier-Einheit in Form einer Strip-Kolonne zugeführt, um Rest-wasserstoff, der insbesondere physikalisch gebunden ist, zu entfernen.

Gemäß einem weiteren Ausführungsbeispiel des erfindungsgemäßen Verfahrens kann Wasserstoffgas zur direkten Verbrennung bereitgestellt werden. Dazu wird LOHC-Edukt in den Dehydrier-Reaktor 2 gefördert. Vor der Zuführung dient das LOHC-Produkt mit dem darin mitgeführten Wasserstoffgas durch Direktkontakt zur Vorwärmung des LOHC-Edukts. In diesem Fall werden also Wasserstoff und LOHC-Edukt über eine gemeinsame Austrittsöffnung und Abführleitung aus dem Dehydrier-Reaktor 2 abgeführt.

Die Dehydrierreaktion erfolgt bei einem Druck von 2,5 bar und einer Temperatur von 310 °C. Der Produktstrom wird nach der Vorwärmung des LOHC-Edukts in einem Phasentrenner grob getrennt in einen überwiegend wasserstoffhaltigen, gasförmigen Produktstrom und einen überwiegend LOHC-haltigen, flüssigen Produktstrom. Das flüssige LOHC-Produkt wird mittels eines Kühlers und durch Vakuumentgasung von dem restlichen Wasserstoff befreit. Der gasförmige Wasserstoffstrom macht eine weitere Konditionierung entbehrlich und kann unmittelbar für Verbrennung genutzt werden.

Gemäß einer weiteren Ausführungsform des Verfahrens kann Wasserstoffgas für die Lebensmittelindustrie genutzt werden. Dazu wird LOHC-Edukt in den Dehydrier-Reaktor 2 gefördert. Zuvor wird es gegen LOHC-Produkt vorgewärmt. Die Dehydrier-Reaktion findet bei 2,5 bar und 310 °C statt. Das freigesetzte Wasserstoffgas wird durch katalytische Wandlung von Kohlenstoffmonoxid zu Methan in einem beschichten Drahtgitter und anschließender Abtrennung flüssiger Bestandteile in einer Waschkolonne und unter Nutzung einer Druckwechsel-Adsorption gereinigt. Gegenüber einer Festbett-Adsorption weist die Druckwechsel-Adsorption den Vorteil auf, dass das Produkt Gas frei ist von Kohlenstoffmonoxid (CO) und Methan (CH₄). Das LOHC-Produkt wird nach der Nutzung zur Vorwärmung des LOHC-Edukts mittels eines Kühlers und einer Strip-Kolonne von Rest-Wasserstoff befreit.

Das erfindungsgemäße Verfahren zum Bereitstellen von Wasserstoffgas kann für weitere Einsatzzwecke dienen wie beispielsweise die Nutzung von Wasserstoff als Schutzgas, das Einbinden weiterer Reinigungsstufen im Wasserstoff-Produktstrom und/oder eine Wasserstoff-Abtrennung im Produktstrom des Wasserstoff-Trägermaterials.

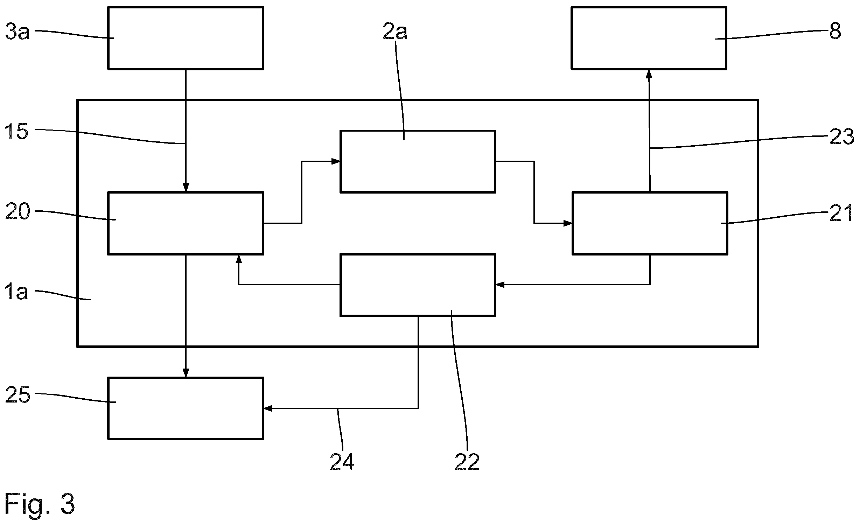

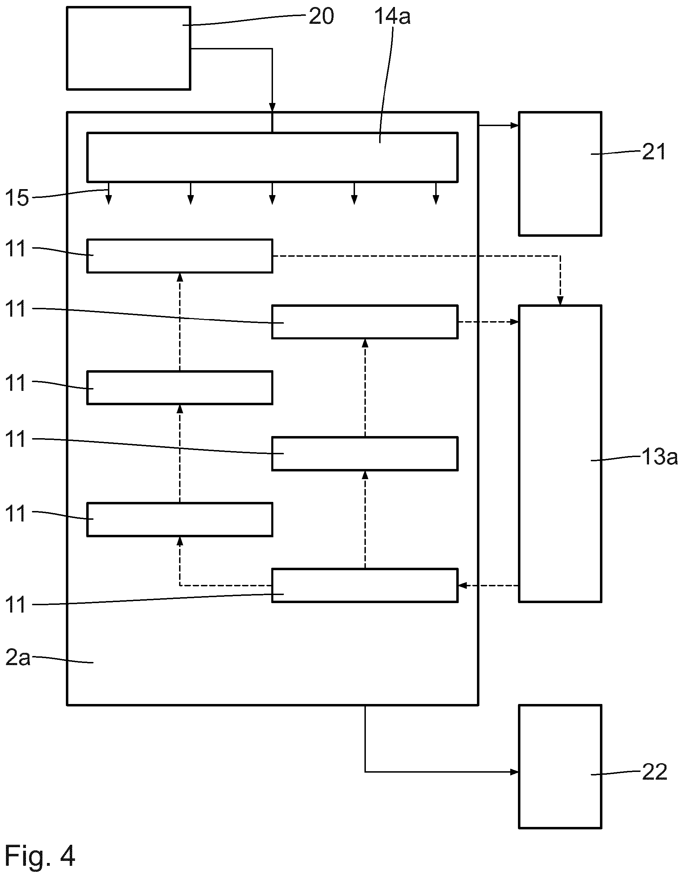

Im Folgenden wird unter Bezugnahme auf Fig. 3 bis 5 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

In dem Transport-Container 1a sind Einheiten für vier grundlegende Verfahrensstufen angeordnet, nämlich eine LOHC-Vorbehandlungseinheit 20, ein Dehydrier-Reaktor 2a, eine Wasserstoff-Konditioniereinheit 21 und eine LOHC-Konditioniereinheit 22.

Von einem möglicherweise außerhalb des Transport-Containers 1a befindlichen LOHC-Speicherbehälters 3a wird über eine Leitung beladenes LOHC 15 in die Vorbehandlungseinheit 20 geleitet. Nach der Vorbehandlung erfolgt im Dehydrier-Reaktor 2a die Freisetzung des Wasserstoffs. Gegebenenfalls erfolgt schon am Ausgang des Dehydrier-Reaktors 2a eine Trennung der flüssigen und gasförmigen Phase, wobei die flüssige Phase direkt in die LOHC-Konditioniereinheit 22 geleitet wird. Die gasförmige Phase wird in der Wasserstoff-Konditioniereinheit 21 nachbehandelt, so dass Restanteile an Flüssigkeit abgetrennt und in die LOHC-Konditioniereinheit 22 geleitet werden. Der erzeugte Wasserstoff 23 wird über eine Leitung an den außerhalb liegenden Wasserstoff-Verbraucher 8 geleitet. Zusätzlich zu dem Wasserstoff-Verbraucher 8 kann eine Wasserstoff-Speichereinheit vorgesehen sein.

Der Wasserstoff 23 hat eine an den Wasserstoff-Verbraucher 8 angepasste Qualität, wobei insbesondere die Wasserstoff-Konditioniereinheit 21 in einer solchen Weise, insbesondere mehrstufig, ausgeführt ist, dass die Qualität mit dem notwendigen Druckniveau je nach Anwendung sichergestellt wird.

In der LOHC-Konditioniereinheit 22 erfolgt die Nachkonditionierung des LOHC, so dass das entladene LOHC 24 in einem möglicherweise außerhalb liegenden zweiten LOHC-Speicherbehälter 25 gelagert werden kann, ohne dass spezielle Anforderungen an Inertisierung oder Handhabung wegen des restlichen Wasserstoffs gestellt werden.

Gegebenenfalls wird ein Teil oder der gesamte LOHC-Strom aus der LOHC-Konditioniereinheit 22 für die LOHC-Vorbehandlungseinheit 20 genutzt, um die Vorbehandlung des beladenen LOHC 15 durch Wärmetausch und/oder Stoffaustausch im Direktkontakt zu bewerkstelligen.

Beladenes und in der LOHC-Vorbehandlungseinheit 20 vorkonditioniertes LOHC 15 wird in den Dehydrier-Reaktor 2a geleitet. Durch eine Verteileinheit 14a, die gemäß dem gezeigten Ausführungsbeispiel als Kapillar-Platte ausgeführt ist. Die Verteileinheit 14a kann grundsätzlich auch in Form eines Duschkopfs oder diversen anderen Ausführungen konstruiert sein. Wesentlich ist, dass das zugeführte, beladene LOHC 15 gleichmäßig auf die im Gehäuse des Dehydrier-Reaktors 2a angeordneten Katalysator-Halterungen verteilt werden. Wesentlich ist ferner, dass Totvolumina vermieden werden. Die Katalysator-Halterungen 11 können Rohre, Platten oder ähnliche Halterungen sein, die ganz oder teilweise mit Katalysator auf einem inerten Trägermaterial und zusätzlich mit weiteren, nichtkatalysatorhaltigen Trägermaterialien gefüllt sein können, um die reaktionstechnischen Bedingungen hinsichtlich Verweilzeitverteilung anzupassen. Die Katalysator-Halterungen 11 sind durch eine externe Heizeinheit 13a beheizt, um einen optimalen Wärmeeintrag für die stark endotherme Reaktion sicherzustellen. Dies kann über Wärmeträgermedien oder andere Methoden erfolgen.

Den Dehydrier-Reaktor 2a verlässt mindestens ein, typischerweise aber zwei LOHC-Ströme, für eine Aufteilung einer überwiegend gasförmigen Phase in die Wasserstoff-Konditioniereinheit 21 und einer flüssigen Phase in die LOHC-Konditioniereinheit 22.

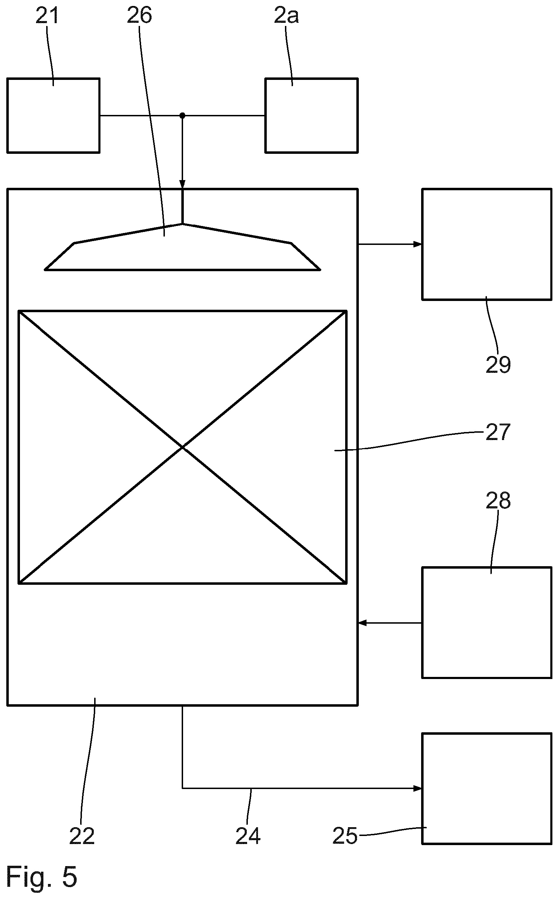

Die in Fig. 5 dargestellte LOHC-Konditioniereinheit 22 ermöglicht eine vorteilhafte Handhabung des LOHC, das insbesondere einen hochviskosen Charakter aufweisen kann. Die LOHC-Konditioniereinheit 22 garantiert eine unkomplizierte und robuste Abtrennung von gelöstem Wasserstoff.

LOHC 15 aus dem Dehydrier-Reaktor 2a oder der Wasserstoff-Konditioniereinheit 21 wird in die LOHC-Konditioniereinheit 22 zur LOHC-Konditionierung geleitet. Innerhalb der LOHC-Konditioniereinheit 22 erfolgt die Generierung einer hohen Oberfläche durch einen Duschkopf 26 als Verteileinheit oder eine Verteileinrichtung mit ähnlicher Funktion. Durch die Erhöhung der Oberfläche des insbesondere hochviskosen LOHC ist die Abtrennung des Wasserstoffgases begünstigt. Die Dehydrierung kann verbessert und vereinfacht durchgeführt werden.

Durch eine Packung, Schüttung oder ähnliche Einrichtung wird in einer darauf folgenden Strip-Einheit 27 eine hohe Oberflächenerneuerung sichergestellt. Ein Strip-Gas wie Luft oder Stickstoff wird von einem außerhalb angeordneten Strip-Gas-Speicher 28 zugeführt und typischerweise im Gegenstrom zum LOHC durch die Strip-Einheit 27 geleitet. Der wasserstoffhaltige Ausgangsstrom kann einer externen Abgasreinigung 29, Lüftung und/oder Verbrennung zugeführt werden. Alternativ zur Einleitung eines Gases aus dem Strip-Gas-Speicher 28 kann, insbesondere im Bereich der Abgasreinigung 29, ein Vakuum angelegt werden, um einen qualitativ ähnlichen Effekt zu erzielen.

Das vom Rest-Wasserstoff befreite und damit zur Lagerung bereitstehende LOHC 24 verlässt die LOHC-Konditioniereinheit 22 über einen eigenen Ausgang zu dem zweiten LOHC-Speicherbehälter 25.

## Patentansprüche

1. Verfahren zum Bereitstellen von Wasserstoffgas umfassend die Verfahrensschritte
- Vorwärmen eines zumindest teilweise hydrierten Wasserstoff-Trägermaterials,
- Freisetzen von Wasserstoffgas durch zumindest teilweises Dehydrieren des Wasserstoff- Trägermaterials,
- Reinigen des freigesetzten Wasserstoffgases,
- Kühlen des zumindest teilweise dehydrierten Wasserstoff-Trägermaterials auf eine Zieltemperatur von weniger als 60°C und Konditionieren des zumindest teilweise dehydrierten Wasserstoff-Trägermaterials, wobei das Konditionieren das Entfernen von physikalisch gelöstem Rest-Wasserstoff von dem Wasserstoff-Trägermaterial umfasst.

2. Verfahren gemäß Anspruch 1, **dadurch gekennzeichnet, dass** das Vorwärmen des Wasserstoff- Trägermaterials ein Kontaktieren mit dem freigesetzten Wasserstoffgas und/oder mit dem zumindest teilweise dehydrierten Wasserstoff- Trägermaterial umfasst.

3. Verfahren gemäß einem der vorstehenden Ansprüche, **dadurch gekennzeichnet, dass** das Freisetzen bei einem Prozessdruck von über 1 bar, insbesondere zwischen 2 bar und 10 bar, insbesondere zwischen 2,5 bar und 5 bar, und/oder bei einer Prozesstemperatur von über 200 °C, insbesondere zwischen 250 °C und 350 °C, insbesondere zwischen 270 °C und 310 °C erfolgt.

4. Verfahren gemäß einem der vorstehenden Ansprüche, **dadurch gekennzeichnet, dass** das Reinigen des freigesetzten Wasserstoffgases ein Abtrennen mindestens einer Verunreinigung umfasst, wobei die mindestens eine Verunreinigung in festem, flüssigem oder gasförmigem Aggregatzustand vorliegt, wobei insbesondere das Abtrennen in mindestens einer Abtrennstufe erfolgt, wobei insbesondere die mindestens eine Abtrennstufe zum Abtrennen einer Verunreinigung in einem bestimmten Aggregatzustand dient.

5. Verfahren gemäß einem der vorstehenden Ansprüche, **dadurch gekennzeichnet, dass** zum Reinigen des freigesetzten Wasserstoffgases eine Druckerhöhung durch ionische, thermische und/oder mechanische Kompression vorgesehen ist.

6. Verfahren gemäß Anspruch 4 oder 5, **dadurch gekennzeichnet, dass** das Abtrennen mindestens eines der Verfahren Koaleszenzabscheidung, Fliehkraftabscheidung, Adsorptionsabscheidung, Gegenstromwäsche oder Eindüsen in eine Waschflüssigkeit aufweist, wobei die Adsorptionsabscheidung insbesondere eine Druckwechsel-Adsorption und/oder eine Temperaturwechsel-Adsorption umfasst.

7. Verfahren gemäß einem der Ansprüche 4 bis 6, **dadurch gekennzeichnet, dass** das Abtrennen eine katalytische Umwandlung der mindestens einen Verunreinigung umfasst.

8. Verfahren gemäß einem der vorstehenden Ansprüche, **dadurch gekennzeichnet, dass** das Reinigen solange erfolgt, bis ein, insbesondere veränderlich, einstellbarer Reinheitsgrad des Wasserstoffgases erreicht ist.

9. Verfahren gemäß einem der vorstehenden Ansprüche, **dadurch gekennzeichnet, dass** das Kühlen mittels einer zusätzlichen Kühleinheit erfolgt.

10. Verfahren gemäß einem der vorstehenden Ansprüche, **dadurch gekennzeichnet, dass** nach dem Konditionieren des Wasserstoffträger-Materials ein Restanteil an physikalisch gelöstem Wasserstoffgas in dem zumindest teilweise dehydrierten Wasserstoff- Trägermaterial zwischen 1 und 10 Gewichts-ppm beträgt.

## Claims

1. Method for providing hydrogen gas comprising the process steps
- pre-heating of an at least partially hydrogenated hydrogen carrier material,
- release of hydrogen gas by means of at least partial dehydrogenation of the hydrogen carrier material,
- purification of the released hydrogen gas,
- cooling of the at least partially dehydrogenated hydrogen carrier material to a target temperature of less than 60 °C and conditioning of the at least partially dehydrogenated hydrogen carrier material, wherein the conditioning includes the removal of physically dissolved residual hydrogen gas from the hydrogen carrier material.

2. Method according to claim 1, **characterized in that** the pre-heating of the hydrogen carrier material comprises a contacting with the released hydrogen gas and/or with the at least partially dehydrogenated hydrogen carrier material.

3. Method according to one of the preceding claims, **characterized in that** the release takes place at a process pressure of more than 1 bar, in particular between 2 bar and 10 bar, in particular between 2.5 bar and 5 bar, and/or at a process temperature of more than 200 °C, in particular between 250 °C and 350 °C, in particular between 270 °C and 310 °C.

4. Method according to one of the preceding claims, **characterized in that** the purification of the released hydrogen gas comprises the separation of at least one impurity, wherein the at least one impurity is present in solid, liquid or gaseous aggregate state, wherein in particular the separation into at least one separation stage is carried out, wherein in particular the at least one separation stage serves for separating an impurity in a specific aggregate state.

5. Method according to one of the preceding claims, **characterized in that** for purification of the released hydrogen gas, a pressure increase by ionic, thermal and/or mechanical compression is provided.

6. Method according to claim 4 or 5, **characterized in that** the separation shows at least one of the methods coalescence precipitation, cyclone separation, adsorption separation, counterflow washer or injection into a washing liquid, wherein the adsorption separation comprises in particular a pressure swing adsorption and/or a temperature change adsorption.

7. Method according to claims 4 to 6, **characterized in that** the separation comprises a catalytic conversion of the at least one impurity.

8. Method according to one of the preceding claims, **characterized in that** the purification takes place until a, in particular variably, adjustable degree of purity of the hydrogen gas is achieved.

9. Method according to one of the preceding claims, **characterized in that** the cooling takes place by means of an additional cooling unit.

10. Method according to one of the preceding claims, **characterized in that** after the conditioning of the hydrogen carrier material a residual portion of physically dissolved hydrogen gas in the at least partially dehydrogenated hydrogen carrier material is between 1 and 10 ppm by weight.

## Revendications

1. Procédé de production de gaz hydrogène comprenant les étapes de procédé
- préchauffage d'un matériau support d'hydrogène au moins partiellement hydraté,
- libération de gaz hydrogène par déshydratation au moins partielle du matériau support d'hydrogène,
- purification du gaz hydrogène libéré,
- refroidissement du matériau support d'hydrogène au moins partiellement déshydraté à une température cible inférieure à 60 °C et conditionnement du matériau support d'hydrogène au moins partiellement déshydraté, le conditionnement comprenant le retrait d'hydrogène résiduel solubilisé physiquement du matériau support d'hydrogène.

2. Procédé selon la revendication 1, **caractérisé en ce que** le préchauffage du matériau support d'hydrogène comprend une mise en contact avec le gaz hydrogène libéré et/ou avec le matériau support d'hydrogène au moins partiellement déshydraté.

3. Procédé selon l'une des revendications précédentes, **caractérisé en ce que** la libération est réalisée pour une pression de processus supérieure à 1 bar, en particulier entre 2 bar et 10 bar, en particulier entre 2,5 bar et 5 bar, et/ou pour une température de processus supérieure à 200 °C, en particulier entre 250 °C et 350 °C, en particulier entre 270 °C et 310 °C.

4. Procédé selon l'une des revendications précédentes, **caractérisé en ce que** la purification du gaz hydrogène libéré comprend une séparation d'au moins une impureté, dans lequel l'au moins une impureté est présente à l'état d'agrégat solide, liquide ou gazeux, dans lequel, en particulier, la séparation est réalisée en au moins une étape de séparation, dans lequel, en particulier, l'au moins une étape de séparation sert à la séparation d'une impureté dans un état d'agrégat déterminé.

5. Procédé selon l'une des revendications précédentes, **caractérisé en ce que,** pour la purification du gaz hydrogène libéré, il est prévu une augmentation de pression par une compression ionique, thermique et/ou mécanique.

6. Procédé selon la revendication 4 ou la revendication 5, **caractérisé en ce que** la séparation comporte au moins un des procédés parmi une précipitation par coalescence, une séparation par centrifugation, une séparation par adsorption, un lavage à contre-courant ou une injection dans un liquide de lavage, dans lequel la séparation par adsorption comprend en particulier une adsorption par changement de pression et/ou une adsorption par changement de température.

7. Procédé selon l'une des revendications 4 à 6, **caractérisé en ce que** la séparation comprend une conversion catalytique de l'au moins une impureté.

8. Procédé selon l'une des revendications précédentes, **caractérisé en ce que** la purification dure jusqu'à ce qu'un degré de pureté du gaz hydrogène pouvant être réglé, en particulier variable, soit atteint.

9. Procédé selon l'une des revendications précédentes, **caractérisé en ce que** le refroidissement est réalisée au moyen d'une unité de refroidissement supplémentaire.

10. Procédé selon l'une des revendications précédentes, **caractérisé en ce qu'**après le conditionnement du matériau support d'hydrogène, une partie résiduelle de gaz hydrogène solubilisé physiquement dans l'au moins un matériau support d'hydrogène au moins partiellement déshydraté se situe entre 1 et 10 ppm en poids.
